# EUROPEAN PATENT APPLICATION

(11) **EP 1 607 278 A1**
(43) Date of publication of application: **21.12.2005**
(21) Application number: 05009502.5
(22) Date of filing: 29.04.2005
(51) Int. Cl.: B60R 21/20

(54) **Airbag cover and airbag system**

(30) Priority: 15.06.2004 JP 2004177581
(71) Applicant: TAKATA CORPORATION, Minato-ku, Tokyo 106-8510 (JP)
(72) Inventor: Tsujimoto, Kei, Takata Corporation, Minato-ku Tokyo 106-8510 (JP); Matsui, Yoshitaka, Takata Corporation, Minato-ku Tokyo 106-8510 (JP); Nakazawa, Wataru, Takata Corporation, Minato-ku Tokyo 106-8510 (JP); Kaifuki, Masahiko, Hiroshima 732-0029 (JP)
(74) Representative: Vossius & Partner

(57) **Abstract**

To provide a technique of constructing an airbag cover for covering the occupant side of a vehicle airbag, which is effective in increasing occupant restraining performance in a vehicle accident.

An airbag cover 101 of an airbag system 100 has an airbag-cover flat surface 110 extending in such a way as to face the occupant, an uprising wall 120 uprising from the back of the airbag-cover flat surface 110 toward a mount portion on the vehicle side and fixed to the mount portion, and a tear line 102 formed in the airbag-cover flat surface 110 and the uprising wall 120, wherein when the vehicle airbag inflates, the airbag cover 101 is cleaved along the tear line 102 in the airbag-cover flat surface 110 and the uprising wall 120 to be divided into four airbag-cover divided pieces and is opened around the hinge of the uprising wall 120.

## Description

The present invention relates to a technique of constructing an airbag cover for covering a vehicle airbag.

Airbag systems mounted to vehicles are provided with an airbag cover for covering the occupant side of a vehicle airbag. The airbag cover has a tear line (a linear groove) in its inner wall surface. In the event of a vehicle collision, the airbag cover is torn open along the tear line to allow deployment of the vehicle airbag to the exterior of the airbag cover.
JP-A-2000-38107 (Patent Document 1) describes the structure of an airbag cover mounted to a steering wheel that incorporates an airbag system. The airbag cover is torn open along a tear line (breaking part) formed in the flat surface of the cover by the inflating force of the vehicle airbag in a vehicle accident. The Patent Document 1 presents a possibility of preventing the interference between the opened airbag cover and the occupant of the vehicle by designing the shape of the tear line formed in the airbag cover. However, the airbag cover of this type requires an increase in occupant restraining performance in an accident with a structure that allows smooth deployment of the vehicle airbag.

The present invention is made in consideration of the foregoing requirement. Accordingly, it is an object of the invention to provide a technique of constructing an airbag cover for covering the occupant side of a vehicle airbag, which is effective in increasing occupant restraining performance in an accident.

In order to achieve the above object, the invention according to the claims is made. The invention according to the claims is a technique applicable to airbag systems mounted in various vehicles, such as cars, trains, motorcycles (saddle-type vehicles), aircraft, and ships and vessels.

A first invention of the present invention for achieving the above object is an airbag cover according to Claim 1. The airbag cover at least has the function of covering the occupant side of a vehicle airbag. The airbag cover of the invention may have a function as a portion to be pressurized to operate a horn, in addition to the function of covering the vehicle airbag. The airbag cover may be arranged for a driver airbag or, alternatively, for a passenger airbag.

The airbag cover of the invention has at least an airbag-cover flat surface, an uprising wall, a tear line for cleaving the airbag cover, and a hinge.
The airbag-cover flat surface is a part of the airbag cover which extends in such a way as to face the occupant. The uprising wall is a part of the airbag cover which uprises from the back of the airbag-cover flat surface toward the mount portion of the vehicle and fixed to the mount portion. Here "the back of the airbag-cover flat surface" is defined as a back surface in the case where the side facing the occupant is a front surface, with the airbag cover mounted. Typically, "the mount portion on the vehicle side" is a part (retainer) that accommodates the vehicle airbag. The tear line is a part with a reduced thickness formed in the airbag-cover flat surface and the uprising wall, for cleaving the airbag cover. Typically, the tear line is formed into a linear groove by ultrasonic machining or laser machining the airbag-cover flat surface and the uprising wall. In this embodiment, the tear line agrees to part or all of the cleaving line which is actually cleaved along the tear line. Briefly, the tear line has only to have the function of forming a cleaving line to bring the airbag cover into a desired cleaved state. The cleaving line may be formed over the tear line. The hinge is formed on the uprising wall and has the function of allowing the opening of the airbag cover. The hinge may be formed on the uprising wall itself or, alternatively, may be made of another member to be mounted to the uprising wall.

When the vehicle airbag is deployed, the airbag cover according to Claim 1 is cleaved along the tear line in the airbag-cover flat surface and the uprising wall to be divided into at least three airbag-cover divided pieces and is opened around the hinge of the uprising wall. Accordingly, in a vehicle accident, the entire airbag cover is cleaved across the airbag-cover flat surface and the uprising wall and so is opened widely from the base to the outer periphery. In the invention, such a motion of the entire airbag cover that opens widely from the base to the outer periphery is defined as "opening."
Thus, according to the invention of Claim 1, the cover opening area that allows the deployment of the vehicle airbag into the occupant protection region is increased and also a three-dimensional space for deployment can be formed rapidly not only on the occupant side of the vehicle airbag but also around the outer periphery. This allows the deploying motion of the vehicle airbag in a short time and in a three-dimensional wide range. This ensures the deployment of the vehicle airbag along the length and width of the vehicle in the occupant protection region while reducing the time required to inflate the vehicle airbag, thus improving the occupant restraining performance in an accident. Also, by the widely opening motion of the entire airbag cover from the base to the outer periphery, the motion of the airbag-cover divided pieces toward the occupant side can be retrained and as such, the interference of the airbag-cover divided pieces with the occupant can be prevented. This allows complete protection of occupants in a vehicle accident.

A second invention of the present invention for achieving the object is a method of manufacturing an airbag cover according to Claim 2.
In the structure of the airbag cover according to Claim 1, the tear line includes at least a plurality of tear-line extensions of the parts of the airbag-cover flat surface, the extensions extending radially from the central region of the airbag cover toward the outer periphery. This airbag cover according to Claim 2 is cleaved radially along the multiple tear-line extensions when the vehicle airbag deploys.
Thus, in the invention according to Claim 2, the three-dimensional space that allows the deployment of the vehicle airbag into the occupant protection region can be increased in the radial direction from the central region of the airbag cover to the outer periphery, thus further ensuring the deployment of the vehicle airbag along the length and width of the vehicle in the occupant protection region.

A third invention of the present invention for achieving the object is an airbag cover according to Claim 3.
In the structure of the airbag cover according to Claim 1 or 2, the tear line includes at least a tear-line extension of the parts of the airbag-cover flat surface, the extension extending from the central region of the airbag cover toward the outer periphery on the upper part of the vehicle. This airbag cover according to Claim 3 operates in such a way so as to cleave along the width of the vehicle along the tear-line extension when the vehicle airbag is deployed. Since the airbag cover is cleaved from the central region of the airbag cover along the width of the vehicle, the airbag-cover divided pieces are surely prevented from moving closer to the occupant.
Accordingly, according to the invention of Claim 3, the interference of the airbag-cover divided pieces with the occupant can be prevented in the process in which the airbag cover is cleaved and opened.

A fourth invention of the present invention for achieving the object is an airbag cover according to Claim 4.
In the structure of the airbag cover according to one of Claims 1 to 3, the uprising wall has a hinge at the end of the uprising wall. Here the end of the uprising wall is defined as the other end, with the back of the airbag-cover flat surface as the base end of the uprising wall. In the invention, the hinge is provided in a position apart from the airbag-cover flat surface as much as possible. When the vehicle airbag deploys, this airbag cover according to Claim 4 is cleaved along the tear line in the airbag-cover flat surface and the uprising wall to be divided into at least three airbag-cover divided pieces and is opened around the hinge that is formed in a position apart from the airbag-cover flat surface as much as possible.
Thus, according to the invention of Claim 4, in a vehicle accident, the entire airbag cover can be opened widely from the base, with the motion of the airbag-cover divided pieces toward the occupant restrained more surely.

A fifth invention of the present invention for achieving the object is an airbag cover according to Claim 5.
The airbag cover according to Claim 5 comprises at least a vehicle airbag, an airbag cover, a retainer, and a gas supply means. The vehicle airbag deploys in the occupant protection region in a vehicle accident. The airbag cover covers the occupant side of the vehicle airbag and has substantially the same structure as that of the airbag cover according to Claim 1. The retainer is a vehicle-side member that accommodates the vehicle airbag. The gas supply means supplies inflation gas so that the vehicle airbag inflates from the retainer.
When the vehicle airbag is deployed in the occupant protection region by the inflation gas supplied from the gas supply means in a vehicle collision, this airbag cover according to Claim 5 is cleaved along the tear line in the airbag-cover flat surface and the uprising wall to be divided into at least three airbag-cover divided pieces and is opened around the hinge of the uprising wall.
Thus, according to the invention of Claim 5, by surely deploying the vehicle airbag along the length and width of the vehicle in the occupant protection region while reducing the time required to inflate the vehicle airbag, the occupant restraining performance in an accident can be improved. Also, by preventing the airbag-cover divided pieces from interfering with the occupant, complete protection of occupants in a vehicle accident can be achieved.

According to an aspect of the invention, in manufacturing an airbag cover for covering the occupant side of a vehicle airbag, a technique of constructing an airbag cover that is effective in increasing occupant restraining performance in an accident can be provided.

An embodiment of the present invention will be described hereinafter with reference to the drawings:
Fig. 1 is a diagram in which the front surface of an airbag system 100 according to an embodiment is viewed from diagonally above;
Fig. 2 is a diagram in which an airbag cover 101 of the airbag system 100 in Fig. 1 is open, as viewed from diagonally above;
Fig. 3 is a plan view of the airbag cover 101 of the embodiment;
Fig. 4 is a schematic sectional view of the airbag system 100 of the embodiment; and
Fig. 5 is a schematic sectional view of the airbag system 100, showing a state in which the airbag cover 101 is open.

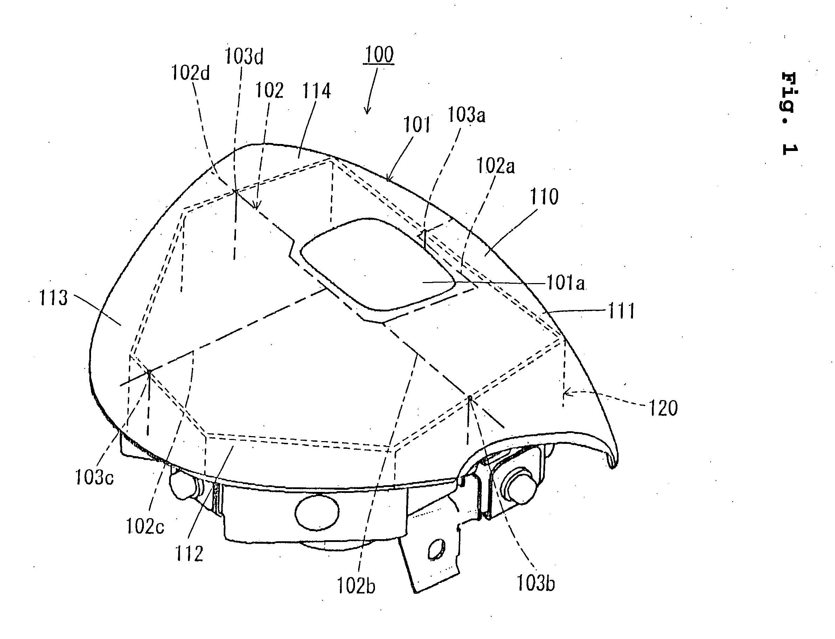

The structure of an airbag system 100 according to the embodiment will first be described with reference to Figs. 1 to 4. The airbag system 100 is an airbag system to be mounted to the steering wheel of a car, although it is not shown in particular. The airbag system 100 corresponds to "an airbag system" of the present invention.

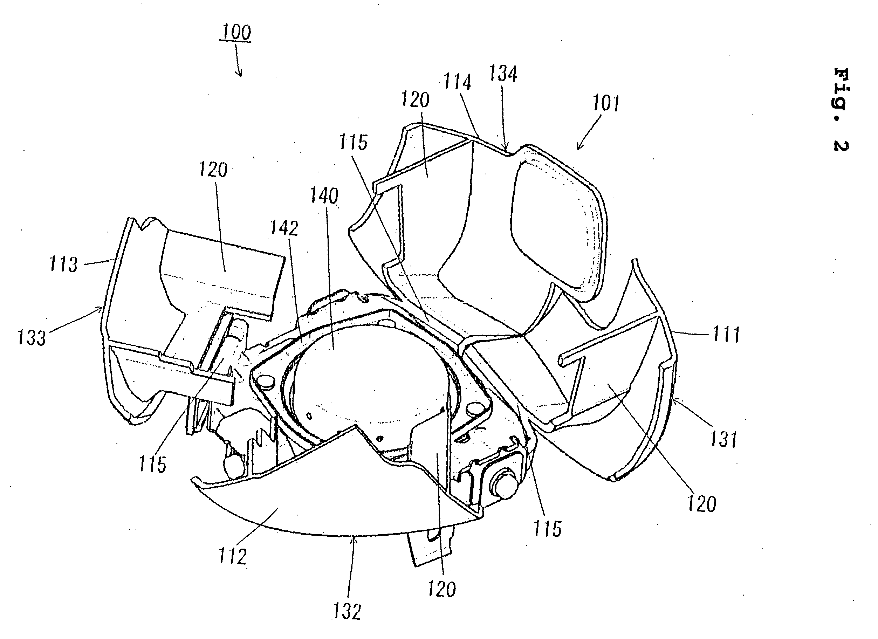

As shown in Figs. 1 and 2, the airbag system 100 is composed principally of a vehicle airbag (a vehicle airbag 144, to be described later), a retainer 142 in which the vehicle airbag is accommodated in a specified folded state, an inflator 140 built in the retainer 142, for supplying inflation gas to the vehicle airbag, and the airbag cover 101 for covering the occupant side of the vehicle airbag in a folded state. The inflator 140 corresponds to "gas supply means" of the invention; the retainer 142 corresponds to "a retainer" of the invention; and the vehicle airbag 144 corresponds to "a vehicle airbag" of the invention. In a vehicle accident, the inflator 140 is activated, so that the vehicle airbag is deployed by the inflation gas supplied from the inflator 140. At that time, the airbag cover 101 is torn open along a tear line (a tear line 102, to be described later) by the inflating force of the vehicle airbag to allow the deployment of the vehicle airbag into an occupant protection region.

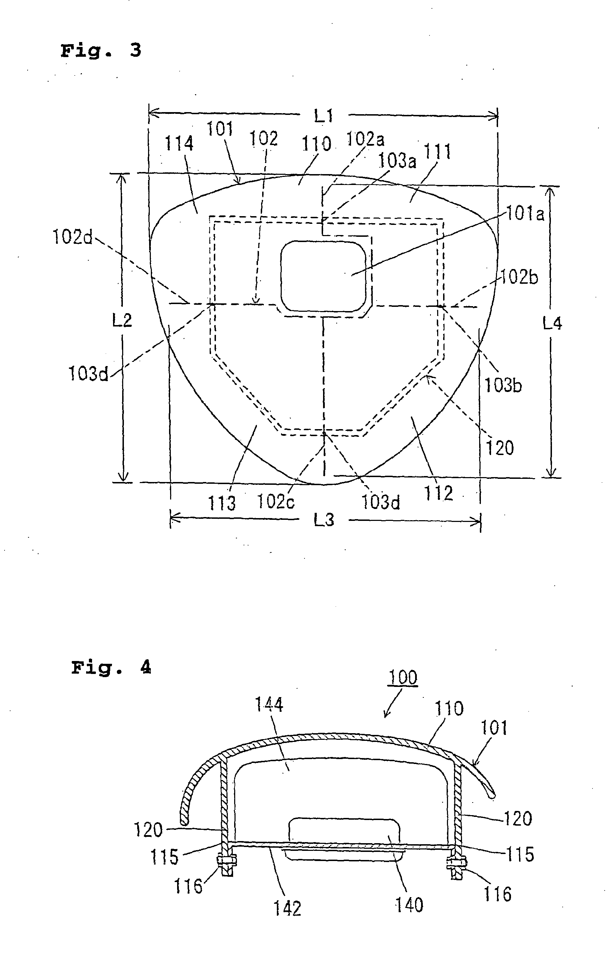

The structure of the airbag cover 101 will now be described in detail with reference to Figs. 1, 3, and 4. Fig. 3 is a plan view of the airbag cover 101 of the embodiment. Fig. 4 is a schematic sectional view of the airbag system 100 of the embodiment.

The airbag cover 101 shown in Fig. 1 has a three-dimensional (solid) plate-like structure made of a resin material such as a polypropylene (PP) material or an olefinic elastomer (TPO) material. The airbag cover 101 is an airbag cover for covering the occupant side of the vehicle airbag and has an airbag-cover flat surface 110, an uprising wall 120, and a tear line 102, as shown in Fig. 1. The airbag cover 101 corresponds to "an airbag cover" of the invention.

Of the parts of the airbag cover 101, the airbag-cover flat surface 110 constructs a flat surface extending so as to face the occupant of the vehicle and extends to the occupant side of the vehicle airbag in a folded state. In about the center of the airbag-cover flat surface 110, an emblem 101a is provided which allows identification of the vehicle manufacturer and the type of vehicle. The airbag-cover flat surface 110 corresponds to "an airbag-cover flat surface" of the invention.

Of the parts of the airbag cover 101, the uprising wall 120 is a part uprising from the back of the airbag-cover flat surface 110 toward the retainer 142 to which the airbag cover 101 is attached, and uprises around the outer periphery of the vehicle airbag in a folded state. Fig. 1 shows the uprising wall 120 uprising from the back of the airbag-cover flat surface 110 by broken lines. The back of the airbag-cover flat surface 110 is defined as a back surface in the case where the side facing the occupant is a front surface, with the airbag cover 101 mounted. The uprising wall 120 corresponds to "an uprising wall" of the invention.

The tear line 102 is a part with a reduced thickness for allowing the airbag cover 101 to be cleaved at the inflation of the vehicle airbag, which is, in this embodiment, a linear groove formed in the back of the airbag-cover flat surface 110. The tear line 102 corresponds to "an airbag-cover cleaving tear line" of the invention. The tear line 102 is indicated by alternate long and short dashed lines in Fig. 1. The tear line 102 is typically formed by ultrasonic machining or laser machining. The tear line 102 is constructed of multiple tear-line extensions extending radially from the central region of the airbag cover 101, in which the emblem 101a is provided, toward the outer periphery of the airbag cover 101. The tear line 102 agrees to part or all of the cleaving line which is actually cleaved along the tear line 102. Briefly, the tear line 102 has only to have the function of forming a cleaving line to bring the airbag cover 101 into a desired cleaved state.

Specifically, the tear line 102 of the embodiment is roughly divided into four tear-line extensions of a first tear-line extension 102a, a second tear-line extension 102b, a third tear-line extension 102c, and a fourth tear-line extension 102d. The first to fourth tear-line extensions 102a, 102b, 102c, and 102d correspond to "a plurality of radial tear-line extensions" according to Claim 2. The airbag-cover flat surface 110 can be segmented into four airbag-cover flat surfaces of a first airbag-cover flat surface 111, a second airbag-cover flat surface 112, a third airbag-cover flat surface 113, and a fourth airbag-cover flat surface 114.

As shown in Fig. 3, the first tear-line extension 102a extends from the central region of the airbag cover 101 toward the upper side of Fig. 3 (hereinafter, referred to as a twelve o'clock direction) such that it avoids the emblem 101a. The first tear-line extension 102a extends from the central region of the airbag cover 101 to a position immediately in front of the outer periphery of the airbag cover 101 toward the outer periphery of the airbag cover 101 on the upper side of the vehicle, and corresponds to "a tear-line extension" according to Claim 3. The second tear-line extension 102b extends from the central region to a position immediately in front of the outer periphery of the airbag cover 101 toward the right side in Fig. 3 (hereinafter, referred to as a three o'clock direction). The third tear-line extension 102c extends from the central region to a position immediately in front of the outer periphery of the airbag cover 101 toward the lower side in Fig. 3 (hereinafter, referred to as a six o'clock direction). The fourth tear-line extension 102d extends from the central region to a position immediately in front of the outer periphery of the airbag cover 101 toward the left side in Fig. 3 (hereinafter, referred to as a nine o'clock direction).

The length of the extension (extending dimension) of the tear line 102 in the airbag-cover flat surface 110 can be set as appropriate depending on the size of the airbag cover 101 in plan view. In this embodiment, it is preferable that relational expressions, L3 ≥ 0.6 × L1 and L4 ≥ 0.6 × L2 hold, where L1 is the maximum lateral length (the lateral length in Fig. 3) of the airbag cover 101, L2 is the maximum longitudinal length (the vertical length in Fig. 3) of the airbag cover 101, L3 is the lateral length (the lateral length in Fig. 3) of the tear line 102, and L4 is the longitudinal length (the vertical length in Fig. 3) of the tear line 102. In this case, the portion corresponding to the lateral length L3 of the tear line 102 is composed of the second tear line 102b and the fourth teat line 102d, and the portion corresponding to the longitudinal length L4 of the tear line 102 is composed of the first tear line 102a and the third teat line 102c. The setting allows the airbag cover 101 to be cleaved smoothly along the tear line 102, thus further ensuring the operation of opening the entire airbag cover 101 widely.

According to the embodiment, each of the first to fourth tear lines 102a, 102b, 102c, and 102d that construct the tear line 102 extends toward the outer periphery of the airbag-cover flat surface 110 and also extends along the inner peripheral wall or the outer peripheral wall of the uprising wall 120 toward the lower end of the uprising wall 120. For example, the first to fourth tear lines 102a, 102b, 102c, and 102d branch off at intersections 103a, 103b, 103c, and 103d at which the airbag-cover flat surface 110 intersects the uprising wall 120 and extend toward the lower end of the uprising wall 120. The state in which the first to fourth tear lines 102a, 102b, 102c, and 102d extend from the intersections 103a, 103b, 103c, and 103d toward the lower end of the uprising wall 120 is schematically shown in Fig. 1.

As shown in Fig. 4, the airbag cover 101 covers the occupant side (the upper side of Fig. 4) of the vehicle airbag 144 in a folded state, and the end of the uprising wall 120 is fixed to the retainer 142 with a fixing means 116, such as a bolt, provided in the vicinity of the horizontal plane of the retainer 142 being attached. Here the end of the uprising wall 120 is defined as the other end, with the back of the airbag-cover flat surface 110 as the base end of the uprising wall 120. Thus, a hinge 115 serving as the fulcrum of the opening operation of the airbag cover 101 is provided in the vicinity of the horizontal surface of the retainer 142. The hinge 115 corresponds to "a hinge" of the invention.

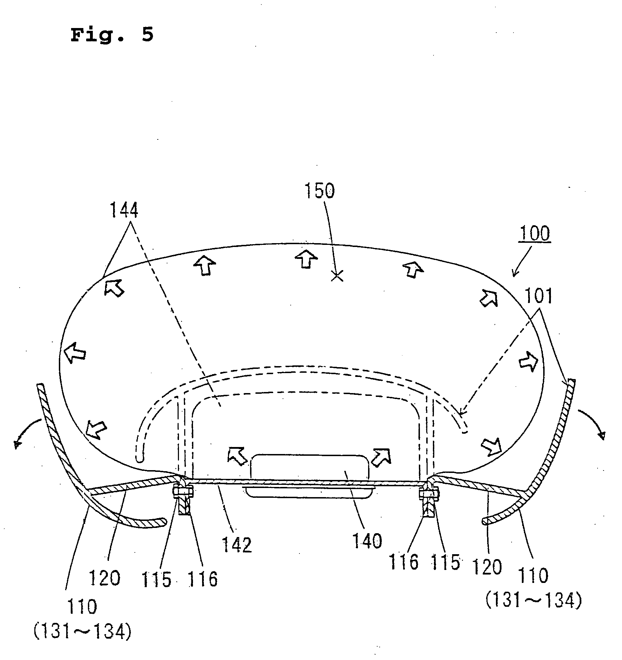

Referring to Figs. 2 and 5, the operation of the airbag system 100 of this embodiment will be described below. Fig. 5 is a schematic sectional view of the airbag system 100, showing a state in which the airbag cover 101 is open.

The airbag cover 101 with the above structure is cleaved along the tear line 102 (the tear-line extensions 102a, 102b, 102c, and 102d) formed in the airbag-cover flat surface 110 and the uprising wall 120 by the deploying force of the vehicle airbag. At that time, the airbag-cover flat surface 110 of the airbag cover 101 is cleaved along the tear line 102 to the outer periphery of the airbag-cover flat surface 110, while the uprising wall 120 of the airbag cover 101 is cleaved along the tear line 102 to the end (the lower end) of the uprising wall 120. Thus, in this embodiment, the cleaving line is formed over the tear line 102.

As shown in Fig. 2, the airbag cover 101 is divided into four airbag-cover divided pieces (opening doors) of a first airbag-cover divided piece 131, a second airbag-cover divided piece 132, a third airbag-cover divided piece 133, and a fourth airbag-cover divided piece 134. The first to fourth airbag-cover divided pieces 131, 132, 133, and 134 correspond to "three or more airbag-cover divided pieces" of the invention. The first airbag-cover divided piece 131 is composed of a first airbag-cover flat surface 111 and the part of the uprising wall 120 which connects with the first airbag-cover flat surface 111. The second airbag-cover divided piece 132 is composed of a second airbag-cover flat surface 112 and the part of the uprising wall 120 which connects with the second airbag-cover flat surface 112. The third airbag-cover divided piece 133 is composed of a third airbag-cover flat surface 113 and the part of the uprising wall 120 which connects with the third airbag-cover flat surface 113. The fourth airbag-cover divided piece 134 is composed of a fourth airbag-cover flat surface 114 and the part of the uprising wall 120 which connects with the fourth airbag-cover flat surface 114.

As shown in Fig. 5, the divided first to fourth airbag-cover divided pieces 131, 132, 133, and 134 are opened while turning radially around the inflator 140 outwards (in the direction of the arrow) with the hinge 115 as the fulcrum. This allows the deployment of the vehicle airbag 144 into an occupant protection region (an occupant protection region 150 in Fig. 5). Thus, the vehicle airbag 144 deploys through the opened airbag cover 101 to the exterior thereof into the occupant protection region 150. In Fig. 5, the states of the vehicle airbag 144 and the airbag cover 101 during the operation of the airbag system 100 are indicated by solid lines; those before the operation of the airbag system 100 are indicated by alternate long and two short dashed lines.

In this embodiment, the entire airbag cover 101 is torn open along the tear line 102 to the outer periphery of the airbag-cover flat surface 110 and the end (the lower end) of the uprising wall 120, and at the time of opening, the hinge 115 is located in the position of the horizontal surface of the retainer 142. Accordingly, the entire airbag cover 101 is opened widely from the base to the outer periphery. This increases the cover opening area that allows the deployment of the vehicle airbag 144 into the occupant protection region 150 and also allows a three-dimensional space for deployment to be formed rapidly not only to the occupant side of the vehicle airbag 144 but also to the outer periphery. Thus, the vehicle airbag 144 can be deployed in a short time and in a three-dimensional wide range. This ensures the deployment of the vehicle airbag 144 along the length and width of the vehicle in the occupant protection region 150 while reducing the time required to inflate the vehicle airbag 144 (or increasing the inflating speed of the vehicle airbag 144), thus allowing an improvement of the occupant restraining performance in an accident.
Also, by the opening motion of the entire airbag cover 101 from the base to the outer periphery, the motion of the airbag-cover divided pieces 131 to 134 toward the occupant side can be retrained and as such, the interference of the airbag-cover divided pieces 131, 132, 133, and 134 with the occupant can be prevented. This allows complete protection of occupants in a vehicle accident.

Particularly, in this embodiment, the tear line 102 is constructed of the tear-line extensions 102a, 102b, 102c, and 102d which extend radially from the central region of the airbag cover 101 toward the outer periphery in the airbag-cover flat surface 110. Accordingly, the three-dimensional space that allows the deployment of the vehicle airbag 144 into the occupant protection region 150 can be increased in the radial direction from the central region of the airbag cover 101 to the outer periphery, thus further ensuring the deployment of the vehicle airbag 144 along the length and width of the vehicle in the occupant protection region 150.

Also, in this embodiment, the tear line 102 is constructed of the tear-line extension 102a which extends radially from the central region of the airbag cover 101 toward the upper outer periphery in the airbag-cover flat surface 110. Thus, the airbag-cover divided pieces 131 and 134 which are divided laterally from the central region of the airbag cover 101 along the tear-line extension 102a are surely prevented from moving closer to the occupant.

This embodiment is constructed such that the hinge 115 is provided at the end of the uprising wall 120 and the airbag cover 101 is opened around the hinge 115 which is provided in a position apart from the airbag-cover flat surface 110 as much as possible. Accordingly, the entire airbag cover 101 can be opened widely from the base toward the outer periphery, with the motion of the airbag-cover divided pieces 131 to 134 toward the occupant restrained more surely.

Also, by the opening motion of the entire airbag cover 101 from the base to the outer periphery in the embodiment, the emblem 101a provided almost in the center of the airbag-cover flat surface 110 can be separated from the vehicle airbag 144 and the occupant when the airbag cover 101 is torn open along the tear line 102.

It is to be understood that the invention is not limited to the above-described embodiment but various applications and modifications can be made. For example, the following applications can be made.

Although the above embodiment has been described with reference to the airbag cover 101 with a structure in which it is divided into four airbag-cover divided pieces of first to fourth airbag-cover divided pieces 131, 132, 133, and 134, the number of airbag-cover divided pieces can be set within the range of three or more as appropriate.

Although the above embodiment has been described with reference to a driver airbag system to be mounted to a steering wheel, the invention can also be applied to the structure of an airbag cover of a passenger airbag system, for example. In the passenger airbag system, the airbag cover of the invention constructs part of an instrument panel.

Although the above embodiment has been described with reference to a car airbag system, the invention is applicable to the structure of airbag systems mounted in vehicles other than cars, such as ships, vessels, and trains.

## Claims

1. An airbag cover for covering the occupant side of a vehicle airbag, the cover comprising: an airbag-cover flat surface extending in such a way as to face the occupant; an uprising wall uprising from the back of the airbag-cover flat surface toward a mount portion on the vehicle side and fixed to the mount portion; a tear line for cleaving the airbag cover, formed on the airbag-cover flat surface and the uprising wall; and a hinge formed on the uprising wall, wherein
when the vehicle airbag is deployed, the airbag cover is cleaved along the tear line in the airbag-cover flat surface and the uprising wall to be divided into at least three airbag-cover divided pieces and is opened around the hinge of the uprising wall.

2. The airbag cover according to Claim 1, wherein
the tear line includes a plurality of tear-line extensions of the parts of the airbag-cover flat surface, the extensions extending radially from the central region of the airbag cover toward the outer periphery of the airbag cover.

3. The airbag cover according to Claim 1 or 2, wherein
the tear line includes a tear-line extension of the parts of the airbag-cover flat surface, the extension extending from the central region of the airbag cover toward the outer periphery of the airbag cover on the upper part of the vehicle.

4. The airbag cover according to Claims 1, 2 or 3, wherein the uprising wall has the hinge at the end of the uprising wall.

5. An airbag system comprising:
a vehicle airbag;
an airbag cover for covering the occupant side of the vehicle airbag;
a retainer on the vehicle side for accommodating the vehicle airbag; and
gas supply means for supplying inflation gas so that the vehicle airbag inflates from the retainer, wherein
the airbag cover comprises: an airbag-cover flat surface extending in such a way as to face the occupant; an uprising wall uprising from the back of the airbag-cover flat surface toward the mount portion of the vehicle and fixed to the retainer; a tear line for cleaving the airbag cover, formed in the airbag-cover flat surface and the uprising wall; and a hinge formed on the uprising wall; and
when the vehicle airbag is deployed into an occupant protection region by the inflation gas supplied from the gas supply means in a vehicle collision, the airbag cover is cleaved along the tear line in the airbag-cover flat surface and the uprising wall to be divided into at least three airbag-cover divided pieces and is opened around the hinge of the uprising wall.
